# EUROPÄISCHE PATENTSCHRIFT

(11) **EP 3 004 191 B1**
(45) Veröffentlichungstag und Bekanntmachung des Hinweises auf die Patenterteilung: **12.07.2017**
(21) Anmeldenummer: 14727186.0
(22) Anmeldetag: 26.05.2014
(51) Int. Cl.: C08G 2/00, C08G 2/10, C07C 47/00

(54) **VERFAHREN ZUR HERSTELLUNG VON POLYOXYMETHYLEN**
METHOD FOR MANUFACTURING POLYOXYMETHYLENE
PROCÉDÉ DE FABRICATION DE POLYOXYMÉTHYLÈNE

(30) Priorität: 29.05.2013 EP 13169687
(43) Veröffentlichungstag der Anmeldung: 13.04.2016
(73) Patentinhaber: BASF SE, 67056 Ludwigshafen am Rhein (DE)
(72) Erfinder: POTTIE, Laurence, 50823 Köln (DE); DEMETER, Jürgen, 67227 Frankenthal (DE); HERMANT, Marie-Claire, 68161 Mannheim (DE)
(74) Vertreter: BASF IP Association
(86) Internationale Anmeldenummer: PCT/EP2014/060815
(87) Internationale Veröffentlichungsnummer: WO 2014/191348

(56) Entgegenhaltungen:
- GB-A- 1 088 435
- US-A- 3 413 269
- US-A- 3 420 797
- US-A- 3 598 788
- US-A- 4 412 067

## Beschreibung

Die vorliegende Erfindung betrifft ein Verfahren zur Herstellung von Polyoxymethylen durch Polymerisation eines Reaktionsgemisches (R_{G}), das mindestens eine Formaldehydquelle und mindestens ein Initiatorgemisch (I_{G}) enthält, wobei das Initiatorgemisch (I_{G}) mindestens einen Polymerisationsinitiator und mindestens ein Lösungsmittel (I) enthält. Ferner bezieht sich die Erfindung auf die Verwendung des Lösungsmittels (I) und auf Polyoxymethylen, dass durch das erfindungsgemäße Verfahren erhältlich ist.

Verfahren zum Herstellen von Polymeren auf der Grundlage von Polyoxymethylen sind aus dem Stand der Technik prinzipiell bekannt. So beschreibt DE 20 38 908 ein Verfahren zur Herstellung von Oxymethylen-Polymeren, bei dem Trioxan und zyklische und/oder lineare Formal-Comonomere unter Verwendung einer PolymerisationsKatalysator-Kombination polymerisiert werden. Diese besteht dabei aus einem Perchlorsäureester/-anhydrid und Dimethyl- oder Diethylether von Glykolen. Es wurde gezeigt, dass die Katalysatorkonzentration verringert werden kann, wenn Dimethyl-oder Diethylether von Glykolen als Lösungsmittel für den Katalysator verwendet werden. Dadurch werden hohe Reaktionsausbeuten und eine verbesserte thermische Stabilität der erhaltenen Polymere beobachtet.

Im Allgemeinen werden in Polymerisationsverfahren, die für die Herstellung von Polyoxymethylen angewendet werden, Lösungsmittel benötigt, um den Initiator und/oder den Desaktivator für die Polymerisationsreaktion zu lösen. Hierdurch können auch kleine Mengen an Initiator definiert zum Reaktionsgemisch zugegeben werden. Eine Anforderung an das Lösungsmittel ist ein Siedepunkt von mehr als 100 °C, so dass dieser über der Reaktionstemperatur der Polymerisationsreaktion liegt. Wird kein Lösungsmittel verwendet, ist es schwierig, die erforderlichen geringen Mengen des Initiators präzise zu dosieren und/oder gleichmäßig im Reaktionsgemisch zu verteilen.

Andererseits stellt sich bei Verwendung von Lösungsmitteln das Problem, diese aus der Reaktion abzutrennen, so dass sie nicht oder nur in geringen Mengen im fertigen Polyoxymethylenpolymer enthalten sind. Andernfalls können sich Lösungsmittel und auch andere Zusatzstoffe bei der Rückführung von abgetrennten Restmonomeren anreichern und dadurch das Polymerisationsverfahren stören, oder aber vollständig oder zumindest in Restmengen im fertigen Polymer verbleiben. Das aus dem Polyoxymethylen-Polymer hergestellte Formteil kann aufgrund der verbleibenden Restmengen an Lösungsmitteln durch Migration, ausschwitzen/ausdünsten oder Belagbildung beeinträchtigt werden.

Hierzu schlägt DE 1 720 780 vor, bei der Herstellung von Trioxancopolymeren als Initiator Bortrifluorid gelöst in einem zyklischen Formal wie 1,3-Dioxolan, das gleichzeitig das Comonomer ist, zuzufügen.

Ferner wird in US 3,598,788 ein Verfahren zur Herstellung von Copolymerisaten des Trioxans beschrieben, bei denen Perchlorsäure verwendet wird, die in Glycoldimethylethern und Lösungsmitteln auf der Grundlage von zyklischem 1,4-Dioxan gelöst ist. Konkret beschreibt US 3,598,788 ein Verfahren zur Herstellung von Copolymeren des Trioxan durch Copolymerisation von Trioxan mit zyklischen Acetalen, linearen Formalen, Polyethylenoxiden oder Präpolymeren von mehrwertigen Alkoholen und Formaldehyd in Gegenwart von wässriger Perchlorsäure als kationischer Initiator. Die Verwendung von nicht wässriger Perchlorsäure als Initiator führt zu Polymeren mit hohem Molekulargewicht bei guten Ausbeuten, selbst bei niedrigen Konzentrationen des Initiators. Die Perchlorsäure muss in sehr geringen Mengen zugesetzt werden, so dass ein Lösungsmittel hierfür notwendig ist, das aus aliphatischen oder zyklischen Ethern, zum Beispiel Monoethylenglykoldimethylether, Diethylenglykoldimethylether, 1,4-Dioxan oder Tetrahydrofuran ausgewählt wird. Als Lösungsmittel für die Perchlorsäure sind 1,4-Dioxan und Diethylenglykoldimethylether besonders geeignet. Die Verwendung anderer Dialkylether wird nicht beschrieben.

US 3,413,269 offenbart ein Verfahren zur Herstellung von hochmolekulargewichtigem Polyoxymethylen, in welchem Paraformaldehyd mit ionisierenden oder ultravioletten Strahlen in einem geschlossenen System angeregt wird, um ein modifiziertes Polyoxymethylen mit höherem Molekulargewicht zu erzeugen, das zur Bildung von Formaldehyd pyrolysiert wird, welches wiederum zu einem Polyoxymethylen mit hohem Molekulargewicht polymerisiert wird. Als Ausgangsmaterial wird kommerzielles Paraformaldehyd mit möglichst hoher Reinheit verwendet, das durch Vakuumtrocknung oder durch Waschen mit trockenen hydrophilen organischen Lösungsmitteln getrocknet werden kann. Die Lösungsmittel schließen als einzigen Dialkylether Diethylenglykoldimethylether ein, weitere gattungsgemäße Dialkylether werden nicht genannt. Zudem beschränkt sich die Verwendung des Diethylenglykoldimethylethers auf das Waschen des Paraformaldehyds und nicht auf das Verdünnen eines kationischen Initiators.

US 4,412,067 beschreibt ein Verfahren zur kontinuierlichen Polymerisation oder Copolymerisation von Trioxan, wobei das Trioxan als Homo- oder Copolymerisat durch kontinuierliches Zuführen des flüssigen Ausgangsmaterials in einem Mischer hergestellt wird, in welchem ein pulverisiertes oder granulares Oxymethylen-Homopolymer oder Copolymer vorhanden ist. Als Ausgangsmaterial für dieses Verfahren dient entweder geschmolzenes Trioxan alleine oder eine geschmolzene Mischung von Trioxan und mindestens einer Verbindung, die mit Trioxan copolymerisierbar ist. Beispiele solcher Verbindungen sind zyklische Ether mit 3 bis 5 Ringen, bevorzugt 3 Ringen, zyklische Acetale, die sich von Trioxan unterscheiden oder lineare Polyacetale. Dieses Verbindungen werden in Mengen von 0,01 bis 20 Gew.-%, bezogen auf das Trioxan, zugesetzt. Als Beispiele für Glycidylether wird unter anderem der Diglycidylether von Diethylenglykol genannt. Auch US 4,412,067 nennt außer Diglycidylether von Diethylenglykol keine weiteren Dialkylether. Zudem wird der Diglycidylether von Diethylenglykol hier als copolymerisierbare Verbindung zugegeben und nicht als Lösungsmittel für einen kationischen Initiator.

GB 1,088,435 offenbart ein Verfahren zur Herstellung von hochreinem Formaldehyd. Konkret wird niedermolekulargewichtiges Polyoxymethylen durch Erhitzen in einem geschlossenen System bei einer Temperatur von 80 °C bis 165 °C weiter polymerisiert, das resultierende Polyoxymethylen mit erhöhtem Molekulargewicht wird getrocknet, um den Gehalt an absorbiertem Wasser zu verringern, und dann das getrocknete Polyoxymethylen zur Herstellung von hochreinem Formaldehyd zersetzt. Ferner kann ein flüssiges Medium in dem Verfahren als Lösungsmittel für das Ausgangsmaterial Polyoxymethylen oder das bereits behandelte Polyoxymethylen verwendet werden. Als Beispiele für solche Medien wird unter anderem Diethylenglykoldimethylether genannt. Diese Vielzahl von möglichen Medien dient als Wärmeüberträgermaterial für die Reaktion und als ein Lösungsmittel oder Dispersionsmittel für Wasser, welches während der Reaktion freigesetzt wird, oder als Trägermedium für den Transport. Diesem Dokument ist nicht zu entnehmen, dass andere Dialkylether als der beschriebene Diethylenglykoldimethylether eingesetzt werden, insbesondere nicht als Lösungsmittel für einen kationischen Initiator.

US 3,420,797 beschreibt ein Verfahren zur Herstellung von Polyoxymethylenen mit hohen Molekulargewichten, in welchem Paraformaldehyd in einem geschlossenen System in der Gegenwart eines Sulfoxykatalysators erhitzt wird, um ein modifiziertes Polyoxymethylen mit höherem Molekulargewicht herzustellen, welches zur Herstellung von Formaldehyd zersetzt wird, das wiederum zum Erhalt eines Polyoxymethylens mit hohem Molekulargewicht und hoher thermischer Stabilität polymerisiert wird. Als Ausgangsmaterial dient hier kommerzielles Formaldehyd mit einer möglichst hohen Reinheit. Das Formaldehyd/Paraformaldehyd kann im Vakuum oder durch Waschen mit einem trockenen, hydrophilen organischen Lösungsmittel getrocknet werden. Zu diesen Lösungsmitteln zählt Diethylenglykoldimethylether. US 3,420,797 gibt keinen Hinweis auf andere Dialkylether und die Verwendung als Lösungsmittel für einen kationischen Initiator.

Im Stand der Technik wird jedoch kein Bezug genommen auf die Migration der eingesetzten Lösungsmittel für den Initiator aus den polymeren Endprodukten.

Dabei ist es wichtig, dass ein kritisches Niveau der Migration für jegliches Initiatorlösungsmittel unterhalb von 10 µg/kg liegt.

Aufgabe der vorliegenden Erfindung ist es folglich, die Nachteile des Standes der Technik zu überwinden. Insbesondere besteht die Aufgabe darin, ein verbessertes Verfahren zur Herstellung von Polyoxymethylen bereitzustellen, mit dem Polyoxymethylen zugänglich ist, das eine deutlich verringerte Migrationsrate des Initiatorlösungsmittels aufweist.

Diese Aufgabe wird gelöst durch ein Verfahren zur Herstellung von Polyoxymethylen durch Polymerisation eines Reaktionsgemisches (R_{G}), das mindestens eine Formaldehydquelle und mindestens ein Initiatorgemisch (I_{G}) enthält,
wobei das Initiatorgemisch (I_{G}) mindestens einen Polymerisationsinitiator und mindestens ein Lösungsmittel der allgemeinen Formel (I) enthält

R¹-O-[-R³-O-]ₘ-R² (I),

in der
- m: 1, 2, 3 oder 4 ist;
- R¹ und R²: unabhängig voneinander C₃- bis C₆-Alkyl sind;
- R³: C₁- bis C₅-Alkylen ist.

Unter dem Begriff "Polyoxymethylen" werden vorliegend sowohl Polyoxymethylen selbst als auch Polyoxymethylencopolymere und Poyloxymethylenterpolymere verstanden.

Die Polyoxymethylencopolymere (POM) sind als solche bekannt und handelsüblich. Sie werden üblicherweise durch Polymerisation von Trioxan als Hauptmonomere hergestellt; außerdem werden Comonomere mitverwendet. Bevorzugt sind die Hauptmonomere ausgewählt aus Trioxan und anderen cyclischen oder linearen Formalen bzw. sonstigen Formaldehyd-Quellen.

Die Bezeichnung "Hauptmonomere" soll ausdrücken, dass der Anteil dieser Monomere an der Gesamtmonomermenge, also der Summe von Haupt- und Comonomeren, größer ist als der Anteil der Comonomere an der Gesamtmonomermenge.

Der Begriff "Formaldehydquelle" bezieht sich dabei auf Substanzen, die unter den Reaktionsbedingungen der Herstellung von Polyoxymethylen Formaldehyd freisetzen können.

Überraschenderweise wurde herausgefunden, dass mit dem erfindungsgemäßen Verfahren Polyoxymethylen-Polymere hergestellt werden können, bei denen die Migrationsrate des Lösungsmittels für den Polymerisationsinitiator unter 10 µg/kg, bevorzugt unter 6 µg/kg, liegt.

Vorteilhaft sind die Formaldehydquellen ausgewählt aus der Gruppe der zyklischen oder linearen Formale, insbesondere aus der Gruppe bestehend aus Formaldehyd, und 1,3,5-Trioxan. Dabei ist 1,3,5-Trioxan insbesondere bevorzugt.

Bevorzugt sind Lösungsmittel der allgemeinen Formel (I), in der
- m: 1, 2, 3 oder 4 ist;
- R¹ und R²: unabhängig voneinander unsubstituiertes C₃- bis C₆-Alkyl sind;
und
- R³: unsubstituiertes C₁- bis C₅-Alkylen ist.

In der allgemeinen Formel (I) sind R¹ und R² bevorzugt identisch. In der allgemeinen Formel (I) sind R¹, R² und R³ bevorzugt unsubstituiert.

Gegenstand der vorliegenden Erfindung ist somit auch ein Verfahren, bei dem ein Lösungsmittel der allgemeinen Formel (I) eingesetzt wird, in dem Verfahren nach Anspruch 1 oder 2, wobei
- m: 1, 2, 3 oder 4 ist;
- R¹ und R²: beide unsubstituiertes C₃- bis C₆-Alkyl sind;
- R³: unsubstituiertes C₁- bis C₅-Alkylen ist.

In der allgemeinen Formel (I) ist m bevorzugt 1, 2 oder 3, besonders bevorzugt ist m 2.

In der allgemeinen Formel (I) ist für R³ Ethylen (-CH₂CH₂-) besonders bevorzugt.

In einer bevorzugten Ausführungsform des erfindungsgemäßen Verfahrens sind in der allgemeinen Formel (I) m = 2, R¹ und R² beide, d.h. identisch, unsubstituiertes C₃- bis C₆-Alkyl und R³ ist Ethylen.

Bevorzugt als Lösungsmittel (I) sind Lösungsmittel ausgewählt aus der Gruppe bestehend aus Diethylenglykoldipropylether, Diethylenglykoldibutylether, Diethylenglykoldipentylether und Diethylenglykoldihexylether.

Unter propyl, butyl, pentyl und hexyl werden vorliegend sowohl die linearen als auch die verzweigten Alkylreste verstanden. Bevorzugt sind die linearen Reste n-propyl, n-butyl, n-pentyl und n-hexyl.

Als Lösungsmittel (I) insbesondere bevorzugt ist Diethylenglykoldibutylether.

Bei Verwendung der erfindungsgemäßen Lösungsmittel (I) können Migrationsraten im fertigen Polyoxymethylen-Polymer realisiert werden, die unterhalb der Nachweisgrenze von 6,0 µg/kg liegen.

Die Migrationsrate wird dabei wie folgt bestimmt:
Aus dem nach dem erfindungsgemäßen Verfahren erhältlichen Polymer wurden Platten spritzgegossen. Die Tests wurden mit spritzgegossenen Platten einer Abmessung von 2,5 cm x 2,5 cm x 2 mm durchgeführt. Der Migrationskontakt wurde nach dem europäischen Standard EN 1186-3 und EN 1186-2 für Ethanollösungen und Olivenöl jeweils durchgeführt. Die Daten der dritten Kontaktstudie werden in der nachstehenden Tabelle 1 angegeben.

Die erfindungsgemäß erhältlichen Polyoxymethylenpolymere können Comonomere enthalten. Ganz allgemein weisen derartige POM-Polymere mindestens 50 mol-% an wiederkehrenden Einheiten -CH₂O- in der Polymerhauptkette auf. Geeignete Polyoxymethylencopolymere sind insbesondere solche, die neben den wiederkehrenden Einheiten -CH₂O- noch bis zu 50, vorzugsweise 0,01 bis 20, insbesondere 0,1 bis 10 mol-% und ganz besonders bevorzugt 0,5 bis 6 mol-% an wiederkehrenden Einheiten der Formel (IIa) 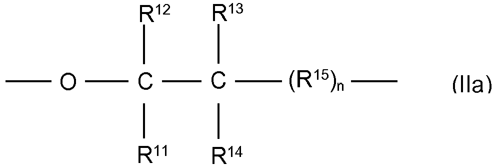 enthalten, wobei R¹¹ bis R¹⁵ die nachfolgend zur allgemeinen Formel (II) angegebenen Bedeutungen haben. Vorteilhafterweise können diese Gruppen durch Ring-Öffnung von cyclischen Ethern in die Polyoxymethylencopolymere eingeführt werden. Bevorzugte sind die Comonomere (C-1).

In einer bevorzugten Ausführungsform des Verfahrens enthält das Reaktionsgemisch (R_{G}) ferner mindestens ein erstes Comonomer (C-1).

Vorzugsweise wird das Comonomer (C-1) aus der Gruppe der zyklischen Ether der allgemeinen Formel (II) ausgewählt 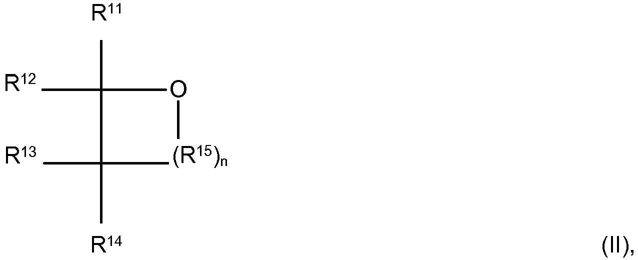 in der
- R¹¹ bis R¹⁴: unabhängig voneinander, H, C₁- bis C₄-Alkyl oder halogensubstituiertes C₁- bis C₄-Alkyl sind;
- R¹⁵: eine chemische Bindung, eine (-CR^{15a}R^{15b}-) -Gruppe oder eine (-CR^{15a}R^{15b}O-)-Gruppe ist, wobei R^{15a} und R^{15b} unabhängig voneinander H, unsubstituiertes oder zumindest monosubstituiertes C₁- bis C₄-Alkyl sind, wobei die Substituenten ausgewählt sind aus F, Cl, Br, OH und C₁-bis C₄-Alkyl;
- n: 0, 1, 2 oder 3 ist.

Wenn n 0 ist, ist R¹⁵ eine chemische Bindung zwischen dem benachbarten Kohlenstoff-Atom und dem Sauerstoff-Atom. Wenn R¹⁵ eine (-CR^{15a}R^{15b}O-)-Gruppe ist, dann ist das Sauerstoff-Atom (O) an ein anderes Kohlenstoff-Atom (C) der Formel (II) und nicht an das Sauerstoff-Atom (O) der Formel (II) gebunden. In anderen Worten umfasst Formel (II) keine Peroxid-Verbindungen.

Unter halogensubstituiert werden dabei Reste verstanden, die 1 oder mehrere Substituenten aus der Gruppe F (Fluor), Cl (Chlor) und Br (Brom) tragen.

Es hat es sich als vorteilhaft erwiesen, wenn das Reaktionsgemisch (R_{G}), bezogen auf die Formaldehydquelle, bis zu 50 Mol-%, insbesondere von 0,01 Mol-% bis 20 Mol-%, des Comonomers (C-1) enthält.

Nur beispielhaft seien als Comonomere (C-1) Ethylenoxid, 1,2-Propylenoxid, 1,2-Butylenoxid, 1,3-Butylenoxid, 1,3-Dioxan, 1,3-Dioxolan und 1,3-Dioxepan (= Butandiolformal, BUFO) sowie lineare Oligo oder Polyformale wie Polydioxolan oder Polydioxepan genannt. 1,3-Dioxolan ist ein besonders bevorzugtes Comonomer (C-1).

Vorzugsweise werden als Polymerisationsinitiator eine Protonensäure, insbesondere eine fluorierte oder chlorierte Alkyl- oder Arylsulfonsäure oder eine Lewis-Säure verwendet. Diese kationischen Initiatoren haben sich als besonders geeignet für die Polymerisationsreaktionen der vorstehend genannten Formaldehydquellen erwiesen. Bevorzugte Beispiele sind Perchlorsäure, Trifluormethansulfonsäure oder LewisSäuren, zum Beispiel Zinntetrachlorid, Arsenpentafluorid, Phosphorpentafluorid und Bortrifluorid und ebenso deren Komplexe und Verbindungen eines Salztyps, zum Beispiel Bortrifluoridetherate und Triphenylmethylenhexafluorphosphate.

Um die Polymerisationsreaktion zuverlässig zu initiieren, sollte der Polymerisationsinitiator, bezogen auf das Reaktionsgemisch (R_{G}), in einer Menge von 0,0001 ppm bis 1000 ppm, insbesondere 0,001 ppm bis 100 ppm, zugegeben werden. Geringere Mengen können zu einer Verzögerung der Polymerisationsreaktion führen, größere Mengen hingegen beschleunigen die Reaktion nicht, können aber zu unerwünschten Nebenprodukten führen und müssen am Ende der Reaktion abgetrennt werden.

Um sicherzustellen, dass die vorstehend genannten, teilweise sehr geringen Mengen an Polymerisationsinitiator zum Reaktionsgemisch (R_{G}) präzise zudosiert und anschließend darin homogen verteilt werden können, ist es vorteilhaft, den Polymerisationsinitiator in dem Lösungsmittel in einer Konzentration von 0,005 Gew.-% bis 5 Gew.-% zu lösen.

In einer bevorzugten Ausführungsform enthält das Reaktionsgemisch (R_{G}) ferner mindestens einen Kettenüberträger, um die Molekulargewichte der Polymere einzustellen. Insbesondere wird hierzu ein einwertiger Alkohol, oder ein Acetal oder ein Formal dieses einwertigen Alkohols verwendet. Besonders bevorzugte Regler sind Methylal und Butylal.

Der Kettenüberträger wird, bezogen auf das Reaktionsgemisch (R_{G}), vorzugsweise in einer Menge von 10 ppm bis 10.000 ppm, insbesondere 100 ppm bis 3000 ppm, zugegeben. Eine geringere Menge hat sich als nicht ausreichend für eine präzise Molekulargewichtseinstellung erwiesen, während mit höheren Mengen regelmäßig nur niedermolekulargewichtige Polymere erhalten werden können.

Ebenfalls geeignet sind Polyoxymethylenpolymere, die zugänglich sind durch Umsetzung einer Formaldehydquelle zusammen mit dem ersten Comonomer (C-1) und einem zweiten Comonomer (C-2).

In einer erfindungsgemäßen Abwandlung der vorliegenden Erfindung enthält das Reaktionsgemisch (R_{G}) ferner mindestens ein zweites Comonomer (C-2), insbesondere eine bifunktionale Verbindung der allgemeinen Formel (III) oder (IV) 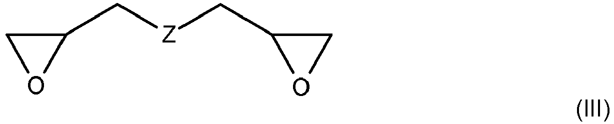 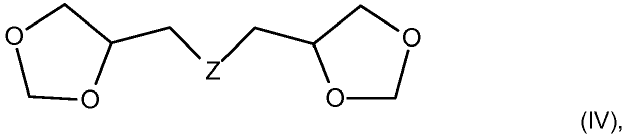 in der
- Z: eine chemische Bindung, eine (-O-)-Gruppe oder eine (-O-R²¹-O-)-Gruppe ist, wobei R²¹ unsubstituiertes C₁- bis C₈-Alkylen oder C₃- bis C₈-Zykloalkylen ist.

Durch die Zugabe des zweiten Comonomers (C-2) können insbesondere Oxymethylen-Terpolymere hergestellt werden. Für das zweite Comonomer (C-2) sind Ethylendiglycid, Diglycidylether und Diether hergestellt aus Glycidylverbindungen und Formaldehyd, Dioxan oder Trioxane in einem molaren Verhältnis von 2 : 1, und ebenso Diether hergestellt aus 2 Mol einer Glycidylverbindung und 1 Mol eines aliphatischen Diols mit 2 bis 8 Kohlenstoffatomen, zum Beispiel der Diglycidylether von Ethylenglycol, 1,4-Butandiol, 1,3-Butandiol, 1,3-Cyclobutandiol, 1,2-Propandiol und 1,4-Cyclohexandiol, bevorzugte Beispiele.

In einem zweiten Aspekt bezieht sich die vorliegende Erfindung auf die Verwendung eines Lösungsmittels der allgemeinen Formel (I)

R¹-O-[-R³-O-]ₘ-R² (I),

in der
- m: 1, 2, 3 oder 4 ist;
- R¹ und R²: unabhängig voneinander C₃- bis C₆-Alkyl sind;
- R³: C₁- bis C₅-Alkylen ist,
als Lösungsmittel für mindestens einen Polymerisationsinitiator bei der Herstellung von Polyoxymethylen.

Für die erfindungsgemäße Verwendung gelten die vorstehend gemachten Ausführungen und Bevorzugungen zum Verfahren entsprechen.

Wie vorstehend bereits beschrieben, kann durch die Verwendung dieses speziellen Lösungsmittels erreicht werden, dass die Migrationsrate des Lösungsmittels für den Polymerisationsinitiator in dem fertigen Polyoxymethylen-Polymer unter 10 µg/kg, bevorzugt unter 6 µg/kg, liegt.

Besonders bevorzugtes Lösungsmittel ist Diethylenglykoldibutylether, insbesondere Diethylenglykoldi-n-butylether der zu Migrationsraten im fertigen Polyoxymethylen-Polymer führt, die unterhalb der Nachweisgrenze von 6,0 µg/kg liegen.

Die vorstehend definierte Aufgabe wird in einem dritten Aspekt der vorliegenden Erfindung durch ein Polyoxymethylen gelöst, das nach dem vorstehend beschriebenen erfindungsgemäßen Verfahren erhältlich ist.

Gegenstand der vorliegenden Erfindung ist somit auch ein Polyoxymethylen, das nach dem erfindungsgemäßen Verfahren erhältlich ist.

Vorzugsweise weist dieses Polyoxymethylen eine Migrationsrate des Lösungsmittels für den Polymerisationsinitiator von weniger als 10 µg/kg, insbesondere weniger als 6 µg/kg, auf.

Das nach dem erfindungsgemäßen Verfahren erhältliche Polyoxymethylen kann weitere übliche Additive enthalten, wie beispielsweise in der WO 2007/009925 beschrieben.

Weitere Merkmale, Vorteile und Anwendungsmöglichkeiten ergeben sich aus der nachfolgenden Beschreibung der bevorzugten, die Erfindung aber nicht einschränkenden Ausführungsbeispiele. Dabei bilden alle beschriebenen Merkmale für sich oder in beliebiger Kombination den Gegenstand der Erfindung, auch unabhängig von ihrer Zusammenfassung in den Ansprüchen oder deren Rückbeziehungen.

### Vergleichsbeispiel V1

Eine schubweise Bulk-Polymerisation der Comonomere 1,3,5-Trioxan und 1,3-Dioxepan wurde unter Stickstoff bei 80 °C in einer industriellen Größenordnung von 1.000 kg/h durchgeführt. In einem Metallbehälter wurden 5 kg einer Mischung aus 1,3,5-Trioxan/1,3-Dioxepan/Di-n-Butylformal in Gewichtsanteilen von 97,13/2,7/0,17 platziert. Die Reaktion wurde unter Verwendung von 0,05 ppm wässriger Perchlorsäure, die in Triethylenglykoldimethylether gelöst war, initiiert.

Das Polymerprodukt wurde direkt zu einer Mühle und nachfolgend in einen Trockner transportiert. Eine Pufferlösung aus 0,01 Gew.-%igem Natriumglycerophosphat und 0,05 Gew.-% Natriumtetraborat wurde auf das gemahlene Polymer gesprüht. Ein kontinuierlicher warmer Stickstoffstrom (80 °C) wurde über das gemahlene Polymer geleitet, während es sich durch die Trockner bewegte, so dass verbleibendes Trioxan entfernt wurde. Die gesamte Verweilzeit des Polymers in dem Trockner lag zwischen drei und sechs Stunden. Von diesen Trocknern wurde das Polymer direkt in einen Extruder gegeben, wo es mit 0,35 Gew.-% Irganox^{®} 245 FF (Handelsprodukt der Fa. Ciba Geigy), 0,15 Gew.-% Glyceroldistearat, 0,2 Gew.-% MFK (Melamin-Formaldehyd-Kondensat) gemischt wurde. Das sich ergebende Polymer wurde granuliert und weiter unter warmem Stickstoff getrocknet, bis das verbleibende Formaldehydniveau unter 100 ppm lag.

Die Analyse des abschließend erhaltenen Polymers wurde durchgeführt, um die Migration jeglicher verbleibender Initiatorlösungsmittel zu bestimmen. Die Tests wurden mit spritzgegossenen Platten einer Abmessung von 2,5 cm x 2,5 cm x 2 mm durchgeführt. Der Migrationskontakt wurde nach dem europäischen Standard EN 1186-3 und EN 1186-2 für Ethanollösungen und Olivenöl jeweils durchgeführt. Die Daten der dritten Kontaktstudie werden in der nachstehenden Tabelle 1 angegeben.

### Vergleichsbeispiel V2

Dieses Beispiel wurde im Wesentlichen wie Vergleichsbeispiel 1 mit dem Unterschied ausgeführt, dass als Lösungsmittel für den Initiator Tetraethylendimethylether verwendet wurde.

### Ausführungsbeispiel 3

Dieses Beispiel wurde im Wesentlichen wie Vergleichsbeispiel 1 mit dem Unterschied durchgeführt, dass als Lösungsmittel für den Initiator Diethylenglykoldibutylether verwendet wurde.

Die Untersuchungen der Vergleichsbeispiele V1 und V2 und des Ausführungsbeispiels 3 werden in Tabelle 1 wiedergegeben.

**Tabelle 1: Migrationsdetails für verbleibende Lösungsmittel aus den Polymerprodukten**

| Beispiel | Lösungsmittel | 10% Ethanol | 20% Ethanol | 50% Ethanol | Nachweisgrenze für ethanolische Lösungen | Olivenöl | Nachweisgrenze für Olivenöl |
|---|---|---|---|---|---|---|---|
| V1 | Triethylenglykoldimethylether (µg/kg) | 12,6 | 14,4 | 19,8 | 5,4 | = NG | 6,0 |
| V2 | Tetraethylenglykoldimethylether (µg/kg) | 36,6 | 41,4 | 45,6 | 6,6 | 24,6 | 6,6 |
| 3 | Diethylenglykoldibutylether (µg/kg) | < NG | < NG | < NG | 6,0 | < NG | 5,4 |

| | | | | | | | |
|---|---|---|---|---|---|---|---|
| NG: Nachweisgrenze. | | | | | | | |

Die Migration der Lösungsmittel aus den abschließend erhaltenen Polymermaterialien ist deutlich geringer für das erfindungsgemäße Lösungsmittel verglichen mit dem Referenzsystem der Vergleichsbeispiele V1 und V2.

Das im erfindungsgemäßen Beispiel 3 eingesetzte Lösungsmittel hat zudem den Vorteil, dass es toxikologisch unbedenklich ist. Das gemäß Beispiel 3 erhaltene Polyoxymethylen ist daher auch für Lebensmittelanwendungen geeignet.

## Patentansprüche

1. Verfahren zur Herstellung von Polyoxymethylen durch Polymerisation eines Reaktionsgemisches (R_{G}), das mindestens eine Formaldehydquelle und mindestens ein Initiatorgemisch (I_{G}) enthält,
wobei das Initiatorgemisch (I_{G}) mindestens einen Polymerisationsinitiator und mindestens ein Lösungsmittel der allgemeinen Formel (I) enthält
R¹-O-[-R³-O-]ₘ-R² (I),
in der
m 1, 2, 3 oder 4 ist;
R¹ und R² unabhängig voneinander C₃- bis C₆-Alkyl sind;
R³ C₁- bis C₅-Alkylen ist.

2. Verfahren nach Anspruch 1, wobei die Formaldehydquelle aus der Gruppe der cyclischen und linearen Formale ausgewählt ist, insbesondere der Gruppe bestehend aus Formaldehyd und 1,3,5-Trioxan.

3. Verfahren nach Anspruch 1 oder 2, wobei
m 1, 2, 3 oder 4 ist;
R¹ und R² beide unsubstituiertes C₃- bis C₆-Alkyl sind;
R³ unsubstituiertes C₁- bis C₅-Alkylen ist.

4. Verfahren nach einem der Ansprüche 1 bis 3, wobei das Reaktionsgemisch (R_{G}) ferner mindestens ein erstes Comonomer (C-1) enthält.

5. Verfahren nach einem der Ansprüche 1 bis 4, wobei das Comonomer (C-1) ein zyklischer Ether der allgemeinen Formel (II) ist, 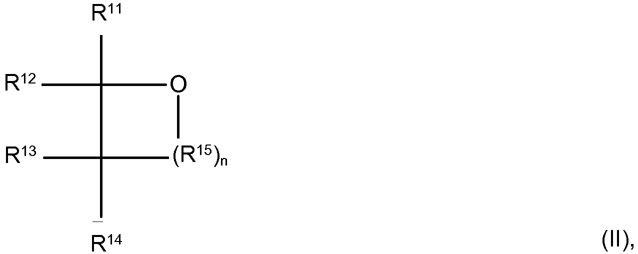 in der
R¹¹ bis R¹⁴ unabhängig voneinander, H, C₁- bis C₄-Alkyl oder halogensubstituiertes C₁- bis C₄-Alkyl sind;
R¹⁵ eine chemische Bindung, eine (-CR^{15a}R^{15b}-)-Gruppe oder eine (-CR^{15a}R^{15b}O-)-Gruppe ist, wobei R^{15a} und R^{15b} unabhängig voneinander H, unsubstituiertes oder zumindest monosubstituiertes C₁- bis C₄-Alkyl sind, in der die Substituenten ausgewählt sind aus F, Cl, Br, OH und C₁- bis C₄-Alkyl;
n 0, 1, 2 oder 3 ist.

6. Verfahren nach einem der Ansprüche 1 bis 5, wobei das Reaktionsgemisch (R_{G}), bezogen auf die Formaldehydquelle, bis zu 50 Mol-%, insbesondere von 0,01 Mol-% bis 20 Mol-%, des Comonomers (C-1) enthält.

7. Verfahren nach einem der Ansprüche 1 bis 6, wobei der Polymerisationsinitiator eine Protonensäure, insbesondere eine fluorierte oder chlorierte Alkyl- oder Arylsulfonsäure oder eine Lewis-Säure ist.

8. Verfahren nach einem der Ansprüche 1 bis 7, wobei der Polymerisationsinitiator, bezogen auf das Reaktionsgemisch (R_{G}), in einer Menge von 0,0001 ppm bis 1000 ppm, insbesondere 0,001 ppm bis 100 ppm, zugegeben wird.

9. Verfahren nach einem der Ansprüche 1 bis 8, wobei der Polymerisationsinitiator in dem Lösungsmittel (I) in einer Konzentration von 0,005 Gew.-% bis 5 Gew.-% gelöst wird, bezogen auf das Gesamtgewicht des Initiatorgemischs (I_{G}).

10. Verfahren nach einem der Ansprüche 1 bis 9, wobei das Reaktionsgemisch (R_{G}) ferner mindestens einen Kettenüberträger enthält, insbesondere einen einwertigen Alkohol, oder ein Acetal oder ein Formal dieses einwertigen Alkohols.

11. Verfahren nach Anspruch 10, wobei der Kettenüberträger, bezogen auf das Reaktionsgemisch (R_{G}), in einer Menge von 10 ppm bis 10.000 ppm, insbesondere 100 ppm bis 3000 ppm, zugegeben wird.

12. Verfahren nach einem der Ansprüche 1 bis 11, wobei das Reaktionsgemisch (R_{G}) ferner mindestens ein zweites Comonomer (C-2) enthält, insbesondere eine bifunktionale Verbindung der allgemeinen Formel (III) oder (IV) 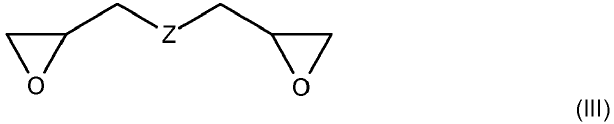 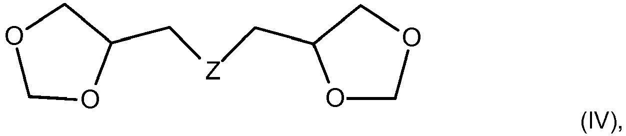 in der
Z eine chemische Bindung, eine (-O-) -Gruppe oder eine (-O-R²¹-O-)-Gruppe ist, wobei R²¹ unsubstituiertes C₁- bis C₈-Alkylen oder C₃- bis C₈-Zykloalkylen ist.

13. Verwendung eines Lösungsmittels der allgemeinen Formel (I)
R¹-O-[-R³-O-]ₘ-R² (I),
in der
m 1, 2, 3 oder 4 ist;
R¹ und R² unabhängig voneinander C₃- bis C₆-Alkyl sind;
R³ C₁- bis C₅-Alkylen ist,
als Lösungsmittel für mindestens einen Polymerisationsinitiator bei der Herstellung von Polyoxymethylen.

14. Polyoxymethylen erhältlich nach dem Verfahren nach einem der Ansprüche 1 bis 12.

15. Polyoxymethylen nach Anspruch 14, wobei das Polyoxymethylen eine Migrationsrate des Lösungsmittels für den Polymerisationsinitiator von weniger als 10 µg/kg, insbesondere weniger als 6 µg/kg, aufweist.

## Claims

1. A process for preparing polyoxymethylene by polymerization of a reaction mixture (R_{G}) which comprises at least one formaldehyde source and at least one initiator mixture (I_{G}), wherein the initiator mixture (I_{G}) comprises at least one polymerization initiator and at least one solvent of the general formula (I)
R¹-O-[-R³-O-]ₘ-R² (I),
where
m is 1, 2, 3 or 4;
R¹ and R² are each, independently of one another, C₃-C₆-alkyl;
R³ is C₁-C₅-alkylene.

2. The process according to claim 1, wherein the formaldehyde source is selected from the group of cyclic and linear formals, in particular the group consisting of formaldehyde and 1,3,5-trioxane.

3. The process according to claim 1 or 2, wherein
m is 1, 2, 3 or 4;
R¹ and R² are both unsubstituted C₃-C₆-alkyl;
R³ is unsubstituted C₁-C₅-alkylene.

4. The process according to any of claims 1 to 3, wherein the reaction mixture (R_{G}) further comprises at least one first comonomer (C-1).

5. The process according to any of claims 1 to 4, wherein the comonomer (C-1) is a cyclic ether of the general formula (II) 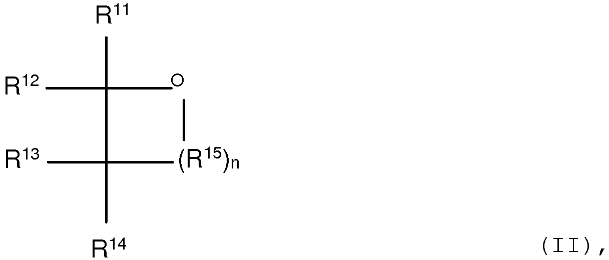 where
R¹¹ to R¹⁴ are each, independently of one another, H, C₁-C₄-alkyl or halogen-substituted C₁-C₄-alkyl;
R¹⁵ is a chemical bond, a (-CR^{15a}R^{15b}-) group or a (-CR^{15a}R^{15b}O-) group, where R^{15a} and R^{15b} are each, independently of one another, H, unsubstituted or at least monosubstituted C₁-C₄-alkyl in which the substituents are selected from among F, Cl, Br, OH and C₁-C₄-alkyl;
n is 0, 1, 2 or 3.

6. The process according to any of claims 1 to 5, wherein the reaction mixture (R_{G}) comprises up to 50 mol%, in particular from 0.01 mol% to 20 mol%, based on the formaldehyde source, of the comonomer (C-1).

7. The process according to any of claims 1 to 6, wherein the polymerization initiator is a protic acid, in particular a fluorinated or chlorinated alkylsulfonic or arylsulfonic acid, or a Lewis acid.

8. The process according to any of claims 1 to 7, wherein the polymerization initiator is added in an amount of from 0.0001 ppm to 1000 ppm, in particular from 0.001 ppm to 100 ppm, based on the reaction mixture (R_{G}) .

9. The process according to any of claims 1 to 8, wherein the polymerization initiator is dissolved in the solvent (I) in a concentration of from 0.005% by weight to 5% by weight, based on the total weight of the initiator mixture (I_{G}).

10. The process according to any of claims 1 to 9, wherein the reaction mixture (R_{G}) further comprises at least one chain transfer agent, in particular a monohydric alcohol or an acetal or a formal of this monohydric alcohol.

11. The process according to claim 10, wherein the chain transfer agent is added in an amount of from 10 ppm to 10 000 ppm, in particular from 100 ppm to 3000 ppm, based on the reaction mixture (R_{G}).

12. The process according to any of claims 1 to 11, wherein the reaction mixture (R_{G}) further comprises at least one second comonomer (C-2), in particular a bifunctional compound of the general formula (III) or (IV) 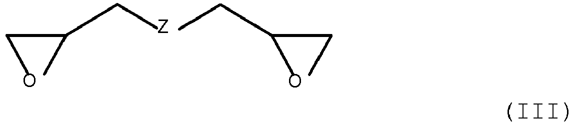 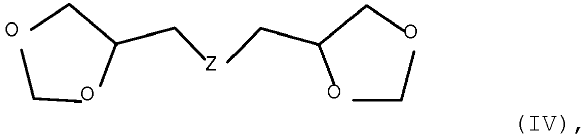 where Z is a chemical bond, an (-0-) group or an (-O-R²¹-O-) group, where R²¹ is unsubstituted C₁-C₈-alkylene or **C**₃-**C**₈-cycloalkylene.

13. The use of a solvent of the general formula (I)
R¹-O-[-R³-O-]ₘ-R² (I),
where
m is 1, 2, 3 or 4;
R¹ and R² are each, independently of one another, C₃-C₆-alkyl;
R³ is C₁-C₅-alkylene,
as solvent for at least one polymerization initiator in the preparation of polyoxymethylene.

14. A polyoxymethylene obtainable by the process according to any of claims 1 to 12.

15. The polyoxymethylene according to claim 14, wherein the polyoxymethylene has a degree of migration of the solvent for the polymerization initiator of less than 10 µg/kg, in particular less than 6 µg/kg.

## Revendications

1. Procédé de fabrication de polyoxyméthylène par polymérisation d'un mélange réactionnel (R_{G}), qui contient au moins une source de formaldéhyde et au moins un mélange d'initiateurs (I_{G}),
dans lequel le mélange d'initiateurs (I_{G}) contient au moins un initiateur de polymérisation et au moins un solvant de formule générale (I)
R¹-O-[-R³-O-]ₘ-R² (I),
dans laquelle
m représente 1, 2, 3 ou 4 ;
R¹ et R² représentent indépendamment l'un de l'autre alkyle en C₃ à C₆ ;
R³ représente alkylène en C₁ à C₅.

2. Procédé selon la revendication 1, dans lequel la source de formaldéhyde est choisie dans le groupe constitué par les formals cycliques et linéaires, notamment dans le groupe constitué par le formaldéhyde et le 1,3,5-trioxane.

3. Procédé selon la revendication 1 ou 2, dans lequel m représente 1, 2, 3 ou 4 ;
R¹ et R² représentent tous les deux alkyle en C₃ à C₆ non substitué ;
R³ représente alkylène en C₁ à C₅ non substitué.

4. Procédé selon l'une quelconque des revendications 1 à 3, dans lequel le mélange réactionnel (R_{G}) contient en outre au moins un premier comonomère (C-1).

5. Procédé selon l'une quelconque des revendications 1 à 4, dans lequel le comonomère (C-1) est un éther cyclique de formule générale (II) 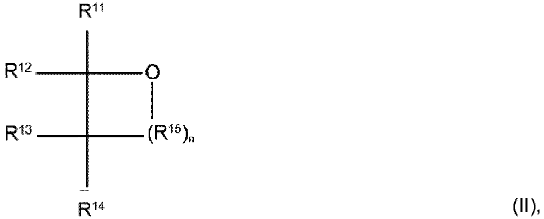 dans laquelle
R¹¹ à R¹⁴ représentent indépendamment les uns des autres H, alkyle en C₁ à C₄ ou alkyle en C₁ à C₄ à substitution halogène ;
R¹⁵ représente une liaison chimique, un groupe (-CR^{15a}R^{15b}- ou un groupe (-CR^{15a}R^{15b}O-), R^{15a} et R^{15b} représentant indépendamment l'un de l'autre H, alkyle en C₁ à C₄ non substitué ou au moins monosubstitué, les substituants étant choisis parmi F, Cl, Br, OH et alkyle en C₁ à C₄ ;
n représente 0, 1, 2 ou 3.

6. Procédé selon l'une quelconque des revendications 1 à 5, dans lequel le mélange réactionnel (R_{G}) contient, par rapport à la source de formaldéhyde, jusqu'à 50 % en moles, notamment de 0,01 % en moles à 20 % en moles, du comonomère (C-1).

7. Procédé selon l'une quelconque des revendications 1 à 6, dans lequel l'initiateur de polymérisation est un acide protonique, notamment un acide alkyl- ou arylsulfonique fluoré ou chloré ou un acide de Lewis.

8. Procédé selon l'une quelconque des revendications 1 à 7, dans lequel l'initiateur de polymérisation est ajouté, par rapport au mélange réactionnel (R_{G}), en une quantité de 0,0001 ppm à 1 000 ppm, notamment de 0,001 ppm à 100 ppm.

9. Procédé selon l'une quelconque des revendications 1 à 8, dans lequel l'initiateur de polymérisation est dissous dans le solvant (I) en une concentration de 0,005 % en poids à 5 % en poids, par rapport au poids total du mélange d'initiateurs (I_{G}).

10. Procédé selon l'une quelconque des revendications 1 à 9, dans lequel le mélange réactionnel (R_{G}) contient en outre au moins un agent de transfert de chaînes, notamment un alcool monovalent, ou un acétal ou un formal de cet alcool monovalent.

11. Procédé selon la revendication 10, dans lequel l'agent de transfert de chaînes est ajouté, par rapport au mélange réactionnel (R_{G}), en une quantité de 10 ppm à 10 000 ppm, notamment de 100 ppm à 3 000 ppm.

12. Procédé selon l'une quelconque des revendications 1 à 11, dans lequel le mélange réactionnel (R_{G}) contient en outre au moins un deuxième comonomère (C-2), notamment un composé bifonctionnel de formule générale (III) ou (IV) 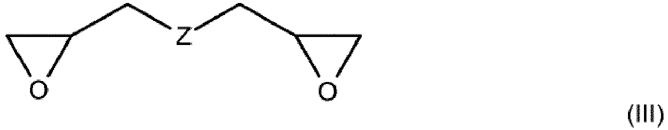 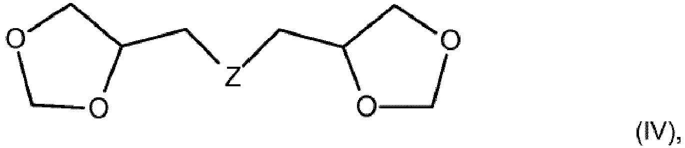 dans lesquelles
Z représente une liaison chimique, un groupe (-0-) ou un groupe (-O-R²¹-O-), R²¹ étant un alkylène en C₁ à C₈ non substitué ou un cycloalkylène en C₃ à C₈.

13. Utilisation d'un solvant de formule générale (I)
R¹-O-[-R³-O-]ₘ-R² (I)
dans laquelle
m représente 1, 2, 3 ou 4 ;
R¹ et R² représentent indépendamment l'un de l'autre alkyle en C₃ à C₆ ;
R³ représente alkylène en C₁ à C₅,
en tant que solvant pour au moins un initiateur de polymérisation lors de la fabrication de polyoxyméthylène.

14. Polyoxyméthylène pouvant être obtenu par le procédé selon l'une quelconque des revendications 1 à 12.

15. Polyoxyméthylène selon la revendication 14, dans lequel le polyoxyméthylène présente un taux de migration du solvant pour l'initiateur de polymérisation de moins de 10 µg/kg, notamment de moins de 6 µg/kg.
